# EUROPEAN PATENT APPLICATION

(11) **EP 3 590 728 A1**
(43) Date of publication of application: **08.01.2020**
(21) Application number: 18761239.5
(22) Date of filing: 01.02.2018
(51) Int. Cl.: B44C 5/04, B32B 27/30, B32B 27/40, E04F 13/00

(54) **DECORATIVE PANEL FOR INTERIOR AND/OR EXTERIOR USE**

(30) Priority: 28.02.2017 ES 201730264
(71) Applicant: Leva Candela, Jose Juan, 03802 Alcoy (Alicante) (ES)
(72) Inventor: Leva Candela, Jose Juan, 03802 Alcoy (Alicante) (ES)
(74) Representative: Maldonado Jordan, Julia
(86) International application number: PCT/ES2018/070075
(87) International publication number: WO 2018/158474

(57) **Abstract**

The invention relates to a decorative panel for interior and/or exterior use, which incorporates a covering that provides same with fireproof and non-toxic properties and which comprises a first layer (1) formed by a layer of iron oxides and mortars applied manually in a horizontal and transverse manner, forming a compact block, wherein the exposed face thereof incorporates the shape and/or motif of a decorative element and wherein said layer (1) incorporates a second layer (2) formed by a water-based acrylic polymer mixture mixed with calcium sulphate hemihydrate (CaSO₄O₄ 0.5H₂0), and a third layer (3) formed by a polyol mixture containing catalysts, surfactant additives, and foaming agents mixed with methylene diphenyl diisocyanate, which is supplemented with micronised calcium carbonate.

## Description

### Object of the Invention

The object of the present specification is a decorative panel for interior and/or exterior use, the main distinctive feature of which lies in the incorporation of a fireproof and non-toxic covering, said panel being able to be used interchangeably both in interior spaces (as a decorative and/or constructive element for commercial and domestic spaces) and exterior spaces, experiencing less degradation than current decorative elements.

### Background of the Invention

Nowadays, the state of the art provides various known constructive and/or decorative solutions in the form of panels using polyurethane as their most characteristic forming element.

In that sense, the same applicant of the invention herein proposed is the proprietor of Spanish patent ES 2 199 071, which describes a prefabricated polyurethane panel consisting of the polyol and isocyanate mixture in a mould previously covered with iron oxides and mortars for ceramic joints, with paint being subsequently applied for release of same from the mould, the assembly being kept in the mould at a temperature ranging between 20 and 25 degrees Centigrade for 15 minutes, where a hydrolysed varnish can subsequently be applied.

Spanish patent ES 2 380 658 defines a series of improvements introduced in the previous patent, and more specifically, in said specification it is mentioned that the prefabricated polyurethane panel consists of the polyol and isocyanate mixture in a mould previously covered with iron oxides and mortars with ceramic joints, and with paint being subsequently applied for removal of same from the mould, the assembly being kept in the mould at a temperature ranging between 20ºC and 25ºC for fifteen minutes, where a hydrolysed varnish can subsequently be applied, the polyurethane panel incorporating an adhesive sheet of polyvinyl chloride foam on one of its faces, such that said sheet allows obtaining an adhesive prefabricated polyurethane panel, with the subsequent advantages it entails during the assembly process.

Likewise, Spanish patent ES 2 294 955 is known, which describes a method of obtaining a prefabricated panel for interior and exterior decoration, wherein a silicone, resin, or metal mould is made on a surface of the material to be reproduced using the decorative panel, such as for example a surface of bricks, natural stone, etc. A release agent and then a layer of iron-oxide based pigmentation or any other type of pigments suited to the material to be reproduced are applied to said mould. Next, an acrylic polymer and calcium sulphate mixture is introduced in a mould, being spread uniformly until achieving a thickness comprised between 2 and 10 mm. Finally, the mould is filled with expanded polyurethane to compact the panel. A panel with large dimensions having the same appearance as the fireproof material with a high thermal and acoustic efficiency that it seeks to reproduce is thereby achieved.

Finally, Spanish patent ES 2 396 111 describes a method of manufacturing an insulating natural stone panel and the panel obtained with said method, which panel is applicable as an interior or exterior covering element and consists of a planar body formed from a natural stone laminate between two and six millimetres thick, incorporating on its non-exposed rear face a layer of polyurethane, which method comprises the following manufacturing steps:
- Making a silicone mould having the appropriate dimensions.
- Manually or mechanically filling said silicone mould with liquid polyurethane.
- After the polyurethane sets, incorporating the natural stone laminate.
- Closing the upper part of the mould and acting on same by applying pressure through a press.

None of the mentioned documents nor those documents known in the state of the art defines a decorative panel for exteriors or interiors, which incorporates a fireproof and/or non-toxic covering as a result of the (water-based) elements which form it and allow the invention described herein to become a particularly useful element in establishments where the public gathers (such as restaurants, shops, or the like) or other public spaces (outpatient clinics or hospitals), where its fireproof properties are necessary and/or vital for preventing possible accidents resulting in the loss of human lives.

### Description of the invention

The technical problem solved by the present invention is to achieve a decorative panel that can be used for covering or as a constructive element *per se,* which can be installed both in exteriors and in interiors. To that end, the decorative panel for interior and/or exterior use, object of the present invention, is characterised in that it comprises a first layer formed by a layer of iron oxides and mortars applied manually in a horizontal and transverse manner, forming a compact block, wherein the exposed face thereof incorporates the shape and/or motif of the decorative element and wherein said layer incorporates a second layer formed by a water-based acrylic polymer mixture mixed with calcium sulphate hemihydrate (CaSO₄O₄ 0.5H₂0), and a third layer formed by a polyol mixture containing catalysts, surfactant additives, and foaming agents mixed with methylene diphenyl diisocyanate, which is supplemented with micronised calcium carbonate.

As a result of the incorporated covering, the panel herein described will incorporate fireproof and/or non-toxic properties, i.e., it will serve as fire protection means, and will not give off toxic volatile substances that can affect people passing through, working, or living in those sites where it is installed.

This is extremely important given that the presence of toxic volatile substances in decorative elements today is something that the owners of public premises try to avoid at all cost, because on one hand, it could lead to scaring off customers (for example, in a restaurant) and/or lawsuits that could result in fines, for example, lodged by the employees of a business.

This can be solved by implementing the panel herein described, which panel prevents this aspect as a result of using non-toxic materials. This makes the panel a highly versatile decorative medium because of its use simplicity, and a medium that is safer than other similar solutions which use polyester fibres, for example.

Throughout the description and claims the word "comprises" and variants thereof do not seek to exclude other technical features, additions, components, or steps. For those skilled in the art, other objects, advantages, and features of the invention will be inferred in part from the description and in part from practice of the invention. The following examples and drawings are provided by way of illustration and do not seek to limit the present invention. Furthermore, the present invention covers all the possible combinations of particular and preferred embodiments herein indicated.

### Brief Description of the Drawings

A series of drawings which help to better understand the invention and which expressly relate to an embodiment of said invention presented as a non-limiting example thereof is very briefly described below.

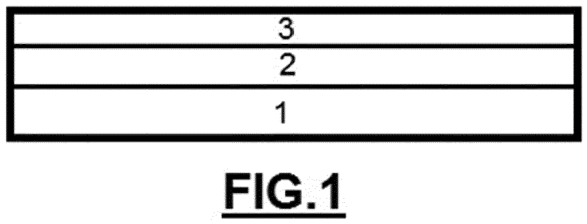

Figure 1 shows a schematic view of a section of the decorative panel for interior and/or exterior use, object of the present invention.

### Preferred Embodiment of the Invention

The attached drawings show a preferred embodiment of the invention. More specifically, the decorative panel for interior and/or exterior use object of the present specification is characterised by comprising a first layer (1) formed by a layer of iron oxides and mortars applied manually in a horizontal and transverse manner, wherein the exposed face thereof incorporates the shape and/or motif of the decorative element and wherein said layer (1) incorporates a second layer (2) formed by a water-based acrylic polymer mixture mixed with calcium sulphate hemihydrate (CaSO₄O₄ 0.5H₂0), providing the composite panel with fireproof and non-toxic properties, which is bound to a third layer (3) formed by a polyol mixture containing catalysts, surfactant additives, and foaming agents mixed with methylene diphenyl diisocyanate, which is supplemented with micronised calcium carbonate.

The water-based acrylic polymer will incorporate individual residual monomers (<0.1), ammonium hydroxide, and water, wherein said water incorporates in a preferred embodiment a small amount of surface-active agent, plasticiser, and thickener. At the same time, the calcium sulphate hemihydrate may incorporate plasticisers and small amounts of discs made of aluminium glass, silicas, dolomite, and granite particles.

In a preferred embodiment, the third layer (3) formed by the polyol mixture and foaming agents will have a preferred specific weight between 1.03 and 1.25 g/cm³, a viscosity between 180 and 925 MPa.s, an ignition temperature greater than 190ºC, and an NCO-free content in the order of 31%. Layer (3) will have a moulded density between 90 and 160 kg/m³, hardness between 40 and 55 ShD, deflection bending strength between 9 and 16 kg/cm², and with an upsetting compressive strength between 4 and 8 kg/cm.

In a preferred embodiment, the micronised calcium carbonate will be formed by CaCO₃ in the order of between 98 and 99%, MgCO₃ in the order of between 0.5 and 1%, and Fe₂O₃ between 0.5 and 1%.

The acrylic polymer of the second layer (2) will have a vapour density <1 water, a vapour pressure of 2266.5 Pa at 20ºC, a melting point of 0ºC, and a boiling point of 100ºC, being dilutable in water.

The calcium sulphate hemihydrate (CaSO₄O₄ 0.5H₂0) will have ph 8.4, a relative density of 2.75, a water solubility of 6.5 g/l, and a melting point of 1610ºC.

In a particular embodiment, a series of recesses are made in the obtained panel to provide it with a tongue and groove configuration, facilitating the placement thereof.

## Claims

1. A decorative panel for interior and/or exterior use, **characterised in that** it includes a first layer (1) formed by a layer of iron oxides and mortars applied manually in a horizontal and transverse manner, wherein the exposed face thereof incorporates the shape and/or motif of the decorative element and wherein said layer (1) incorporates a second layer (2) formed by a water-based acrylic polymer mixture mixed with calcium sulphate hemihydrate (CaSO₄O₄ 0.5H₂0), and a third layer (3) formed by a polyol mixture containing catalysts, surfactant additives, and foaming agents mixed with methylene diphenyl diisocyanate, which is supplemented with micronised calcium carbonate.

2. The panel according to claim 1, wherein the obtained panel incorporates a series of recesses to provide it with a tongue and groove configuration, facilitating the placement thereof.

3. The panel according to any of claims 1 to 2, wherein the water-based acrylic polymer incorporates individual residual monomers (<0.1), ammonium hydroxide, and water, and wherein said water in turn incorporates surface-active agents, plasticisers, and thickeners.

4. The panel according to any of claims 1 to 3, wherein the calcium sulphate hemihydrate incorporates plasticisers and a low percentage of discs made of aluminium glass, silicas, dolomite, and granite particles.

5. The panel according to any of claims 1 to 4, wherein the third layer (3) formed by the polyol mixture and foaming agents has a preferred specific weight between 1.03 and 1.25 g/cm³, a viscosity between 180 and 925 MPa.s, an ignition temperature greater than 190ºC, and an NCO-free content in the order of 31%, with its moulded density being between 90 and 160 kg/m³, hardness between 40 and 55 ShD, deflection bending strength between 9 and 16 kg/cm², and with an upsetting compressive strength between 4 and 8 kg/cm.

6. The panel according to any of claims 1 to 5, wherein the micronised calcium carbonate is formed by CaCO₃ in the order of between 98 and 99%, MgCO₃ in the order of between 0.5 and 1%, and Fe₂O₃ between 0.5 and 1%.

7. The panel according to any of claims 1 to 6, wherein the acrylic polymer of the second layer (2) has a vapour density <1 water, a vapour pressure of 2266.5 Pa at 20ºC, a melting point of 0ºC, and a boiling point of 100ºC, being dilutable in water.

8. The panel according to any of the preceding claims, wherein the calcium sulphate hemihydrate (CaSO₄O₄ 0.5H₂0) will have pH 8.4, a relative density of 2.75, a water solubility of 6.5 g/l, and a melting point of 1610ºC.
